(19) **Europäisches Patentamt European Patent Office Office européen des brevets**

(11) **EP 2 131 483 B1**

(12) **FASCICULE DE BREVET EUROPEEN**

(45) Date de publication et mention de la délivrance du brevet:
**07.09.2011  Bulletin 2011/36**

(51) Int Cl.:
*H02P 3/02* *(2006.01)*    *H02M 5/44* *(2006.01)*

(21) Numéro de dépôt: **09161967.6**

(22) Date de dépôt: **04.06.2009**

(54) **Variateur de vitesse avec super-condensateur**

Geschwindigkeitsregler mit Superkondensator

Speed regulator with super capacitor

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **05.06.2008  FR 0853722**

(43) Date de publication de la demande:
**09.12.2009  Bulletin 2009/50**

(73) Titulaire: **Schneider Toshiba Inverter Europe SAS 27120 Pacy sur Eure (FR)**

(72) Inventeurs:
• **Baudesson, Philippe**
  **27220 La Boissiere (FR)**
• **Grbovic, Petar**
  **27200 Vernon (FR)**
• **Le Moigne Philippe**
  **59310 Nomain (FR)**

(74) Mandataire: **Bié, Nicolas et al**
**Schneider Electric Industries SAS**
**Service Propriété Industrielle**
**35 rue Joseph Monier - CS 30323**
**92506 Rueil-Malmaison Cedex (FR)**

(56) Documents cités:
**EP-A- 1 833 158        JP-A- 2006 087 299**
**US-A1- 2003 089 557**

• **SRAJBER D: "How to find the best solution for power converters and for the new principle of operation" 19930101, 1 janvier 1993 (1993-01-01), pages 246-249, XP006511470**

• **CHUNG-PING CHEN ET AL: "Error Bounded Padé Approximation via Bilinear Conformal Transformation" DESIGN AUTOMATION, 1999. 36TH ANNUAL CONFERENCE ON NEW ORLEANS, LA, USA 21-25 JUNE 1999, PISCATAWAY, NJ, USA,IEEE, 21 juin 1999 (1999-06-21), pages 7-12, XP010762051 ISBN: 978-1-58113-109-3**

• **NONAKA S ET AL: "Single-phase PWM current source converter with double-frequency parallel resonance circuit for DC smoothing" INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US, 2 octobre 1993 (1993-10-02), pages 1144-1151, XP010118825 ISBN: 978-0-7803-1462-7**

• **TEULINGS W ET AL: "Analysis of the current distribution between paralleled capacitors in a chopper on printed circuit board" INDUSTRY APPLICATIONS CONFERENCE, 1997. THIRTY-SECOND IAS ANNUAL MEETI NG, IAS '97., CONFERENCE RECORD OF THE 1997 IEEE NEW ORLEANS, LA, USA 5-9 OCT. 1997, NEW YORK, NY, USA,IEEE, US, vol. 2, 5 octobre 1997 (1997-10-05), pages 1066-1072, XP010248464 ISBN: 978-0-7803-4067-1**

• **CHUNG-PING CHEN ET AL: "Error bounded Pade approximation via bilinear conformal transformation" DESIGN AUTOMATION CONFERENCE, 1999. PROCEEDINGS. 36TH NEW ORLEANS, LA, USA 21-25 JUNE 1999, PISCATAWAY, NJ, USA,IEEE, US, 21 juin 1999 (1999-06-21), pages 7-12, XP010344048 ISBN: 978-1-58113-092-8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention se rapporte à un variateur de vitesse comportant des moyens de stockage de l'énergie générée lors d'un freinage de la charge électrique. Ces moyens de stockage se présentent par exemple sous la forme d'un ou plusieurs super-condensateurs, appelés également super-capacités ou ultra-capacités.

De manière connue, un variateur de vitesse est connecté au réseau électrique d'alimentation et destiné à commander une charge électrique. Il comporte en entrée un module redresseur de tension qui génère une tension continue à partir d'une tension alternative fournie par le réseau et qui alimente en aval un bus de puissance continu doté d'une ligne positive et d'une ligne négative. Un condensateur de filtrage, appelé communément condensateur de bus, est monté entre une ligne positive et une ligne négative du bus continu. En sortie, le variateur comporte un module onduleur alimenté par le bus continu, permettant de générer, à partir de la tension continue, une tension variable qui peut être d'amplitude et de fréquence variables en utilisant des interrupteurs électroniques par exemple de type transistor IGBT commandés par Modulation à Largeur d'Impulsions (MLI ou PWM).

Il est connu du document EP1833158 une méthode et un système pour gérer la sortie électrique d'un turbogénérateur. Pour cela le document propose d'employer un convertisseur DC-DC connecté en parallèle sur le bus continu.

Il est connu du document US 6,742,630 un dispositif implanté dans un variateur de vitesse pour récupérer l'énergie de freinage d'installations de type ascenseur ou levage. Ce type de dispositif est composé d'une unité de stockage d'énergie formée de super-condensateurs et d'un régulateur d'énergie capable d'ajuster le flux d'énergie entre les différents niveaux de tension du bus continu et de l'unité de stockage et de charger l'unité de stockage à partir du surplus d'énergie. Par ailleurs, lorsque la demande en énergie de la charge est importante, les super-condensateurs sont déchargés dans le bus continu.

Ce type de dispositif décrit dans l'art antérieur permet donc de stocker l'énergie de freinage, de fournir de l'énergie au démarrage de la charge, de compenser des creux de tension et de remplir sur une courte durée une fonction d'alimentation sans interruption (appelée UPS pour "Uninterruptible Power Supply"). Ce type de dispositif présente l'avantage d'être particulièrement simple, robuste et d'être parfaitement compatible avec des réseaux d'alimentation mono- ou triphasés. Cependant, il présente certains inconvénients car il ne permet pas de réduire le THDI (Taux d'Harmoniques de distorsion en courant) en entrée du module redresseur.

Le but de l'invention est de proposer un variateur de vitesse permettant de remplir les fonctions du dispositif de l'art antérieur et dans lequel le THDI en entrée du variateur est réduit.

Ce but est atteint par un variateur de vitesse comportant :

- un bus continu d'alimentation de puissance doté d'une ligne positive et d'une ligne négative,

- un condensateur de bus, formant une source de tension, connecté entre la ligne positive et la ligne négative du bus continu,

- un module onduleur alimenté par le bus continu et commandé pour délivrer une tension variable à une charge électrique,

- des moyens de stockage de l'énergie électrique récupérée lors d'un freinage de la charge électrique,

- un convertisseur continu/continu connecté en amont et en parallèle du condensateur de bus, entre la ligne positive et la ligne négative du bus continu,

- un dispositif monté sur la ligne positive ou la ligne négative du bus continu entre le convertisseur continu/continu et le condensateur de bus, ledit dispositif permettant de transformer la source de tension constituée par le condensateur de bus en une source de courant,

- des moyens de mesure ou d'estimation du courant circulant dans la ligne du bus continu portant ledit dispositif,

- un module de commande du convertisseur continu/continu pour contrôler le courant traversant les moyens de stockage d'énergie en fonction du courant mesuré ou estimé circulant dans la ligne du bus continu portant le dispositif.

Selon l'invention, le dispositif permettant de transformer la source de tension constituée par le condensateur de bus en source de courant est une première inductance. Le variateur comporte en outre une seconde inductance montée en série avec la première inductance. Cette seconde inductance est montée en série avec la première inductance sur la ligne positive ou négative du bus continu, le convertisseur continu/continu étant connecté sur la ligne correspondante du bus continu entre la première inductance et la seconde inductance.

Selon une autre particularité, les moyens de mesure sont placés en amont ou en aval du point de connexion du convertisseur continu/continu sur la ligne du bus continu portant la première inductance.

Selon l'invention, le convertisseur continu/continu comporte deux interrupteurs électroniques en série montés entre la ligne positive et la ligne négative du bus continu et un condensateur monté en parallèle et en amont des deux interrupteurs. Les interrupteurs électroniques du convertisseur continu/continu sont par exemple de type IGBT.

Selon une autre particularité, le variateur comporte une troisième inductance connectée entre le point milieu formé par les deux interrupteurs électroniques du convertisseur continu/continu et une borne des moyens de stockage d'énergie.

Selon une autre particularité, le variateur comporte également des moyens de mesure du courant circulant à travers les moyens de stockage d'énergie.

Selon une autre particularité, le variateur comporte un interrupteur monté en amont du convertisseur continu/continu, sur une ligne conductrice reliant le convertisseur continu/continu au bus continu.

Selon une autre particularité, le module de commande comporte une boucle externe contrôlant une boucle interne de courant destinée à la commande du convertisseur continu/continu.

Selon une autre particularité, les moyens de stockage d'énergie comportent un ou plusieurs super-condensateurs.

D'autres caractéristiques et avantages vont apparaître dans la description détaillée qui suit en se référant à un mode de réalisation donné à titre d'exemple et représenté par les dessins annexés sur lesquels :

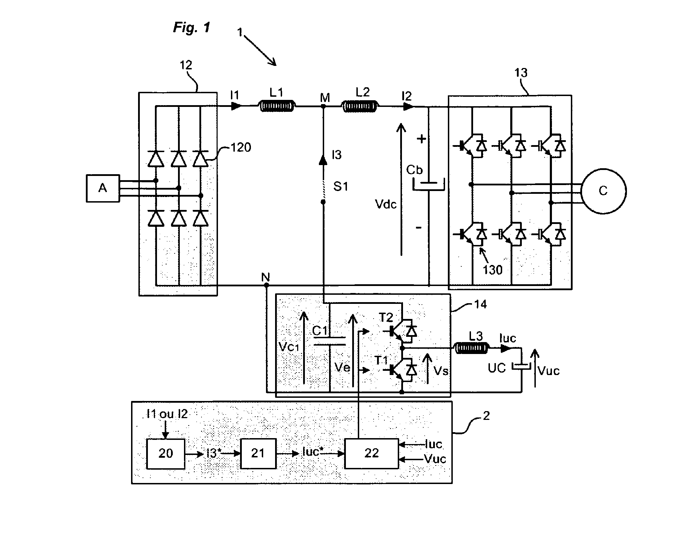

-   la figure 1 représente schématiquement un variateur de vitesse selon l'invention.

En référence à la figure 1, un variateur de vitesse 1 comporte en entrée un module redresseur 12 qui est destiné à redresser une tension triphasée alternative provenant d'un réseau d'alimentation extérieur A (par exemple un réseau électrique triphasé 380Vac). Ce module redresseur 12 utilise avantageusement des diodes 120 qui sont plus économiques et plus fiables que des thyristors. Cette tension redressée peut être filtrée pour obtenir une tension continue Vdc (par exemple de l'ordre de 200 à 800Vcc ou plus, suivant les conditions d'utilisation) appliquée sur un bus continu d'alimentation de puissance composé d'une ligne positive 10 et d'une ligne négative 11. Un condensateur de bus Cb est habituellement utilisé pour maintenir constante la tension Vdc du bus continu. Ce condensateur de bus Cb est connecté entre la ligne positive 10 et la ligne négative 11 du bus et est généralement de type électrolytique dans les variateurs standards.

Le variateur de vitesse 1 comporte en sortie un module onduleur 13 permettant, à partir du bus continu, de commander une charge électrique C avec une tension variable qui peut être d'amplitude et de fréquence variables. Le module onduleur 13 utilise pour cela une commande par Modulation à Largeur d'Impulsions (MLI ou PWM) pour commander des interrupteurs électroniques de puissance 130 montés sur chaque phase. Ces interrupteurs sont des transistors de puissance, par exemple de type IGBT, commandés par une unité de commande (non représentée) réalisant la MLI. Sur la figure 1, le module onduleur 13 comporte trois bras pour délivrer une tension variable triphasée à la charge électrique C, chaque bras étant doté de deux transistors de puissance 130 en série entre une borne positive et une borne négative du bus de puissance, soit un total de six transistors de puissance.

L'invention consiste notamment à connecter des moyens de stockage d'énergie entre la ligne positive 10 et la ligne négative 11 du bus continu et à placer un convertisseur continu/continu 14 (dénommé ci-après convertisseur DC/DC) entre les moyens de stockage d'énergie et le bus continu. Les moyens de stockage d'énergie sont par exemple composés de un ou plusieurs condensateurs, plus particulièrement du type super-condensateur(s) (appelé également super-capacité ou ultra-capacité). Un super-condensateur se comporte comme une batterie électrochimique en ce qu'il est capable de stocker un volume d'énergie électrique plus important qu'un condensateur standard, mais contrairement à une batterie électrochimique, il se comporte comme un condensateur standard en ce qu'il est capable de supporter de forts courants de charge et de décharge.

L'ensemble constitué par les moyens de stockage d'énergie (désignés ci-après super-condensateur UC) et le convertisseur DC/DC 14 est connecté, entre la ligne positive 10 et la ligne négative 11 du bus continu, en parallèle du condensateur de bus, en aval par rapport au module redresseur et en amont par rapport au condensateur de bus Cb. Le convertisseur DC/DC 14 est connecté en un point M sur la ligne positive 10 du bus continu et en un point N sur la ligne négative 11 du bus continu.

Le convertisseur DC/DC 14 comporte un condensateur C1 et deux transistors de puissance T1, T2 en série, par exemple de type IGBT. Le condensateur C1 est connecté en parallèle du condensateur de bus Cb et en parallèle des deux transistors T1, T2 en série. Le condensateur C1 est un condensateur de découplage formant une cellule de commutation avec les transistors T1 et T2. Cette cellule de commutation doit présenter une inductance parasite la plus faible possible pour limiter les surtensions liées à la commutation des deux transistors T1, T2 et ne pas dépasser la tension maximale que peuvent supporter les deux transistors (600 Volts pour une tension réseau de 200 Volts ou 1200 Volts pour une tension réseau de 400 Volts). Par ailleurs, la capacité du condensateur C1 est de faible valeur, par exemple de l'ordre de quelques microfarads de manière à filtrer les commutations.

En outre, afin de pouvoir contrôler le courant Iuc à destination du super-condensateur UC, une inductance L3 est connectée entre le point milieu des deux transistors T1 et T2 et une première borne du super-condensateur UC. La seconde borne du super-condensateur UC est rebouclée sur la borne libre de l'un des deux transistors T1 ou T2. L'inductance L3 est une inductance de lissage destiné à limiter l'ondulation du courant circulant dans le super-condensateur UC. Cette ondulation devra par exemple être de 15%.

Afin de transformer la source de tension constituée par le condensateur de bus Cb en source de courant, un dispositif est ajouté en série sur la ligne positive 10 ou la ligne négative 11 du bus continu, en amont du condensateur de bus Cb et en aval du point de connexion M ou N du convertisseur DC/DC 14 sur le bus continu. Ce dispositif est par exemple une inductance L2. Sur la figure 1, l'inductance L2 est placée sur la ligne positive 10 du bus continu. Suivant sa valeur, l'inductance L2 permet de réduire naturellement le taux d'harmoniques de distorsion en courant (ci-après THDI) à une valeur comprise entre 48% et 80%. En outre, pour certaines applications, l'inductance L2 permet également de réduire le courant maximal à destination du convertisseur DC/DC et ainsi de pouvoir optimiser le dimensionnement des transistors T1, T2 du convertisseur DC/DC. En remplacement de l'inductance L2, le dispositif permettant de transformer la source de tension constituée par le condensateur de bus Cb en source de courant, peut être par exemple une diode avec un interrupteur monté en parallèle ou une résistance sans perte.

Compte tenu de la faible valeur de la capacité du condensateur C1, il se produit une ondulation en tension non négligeable à chaque commutation des deux transistors T1, T2 du convertisseur DC/DC. Pour éviter que cette ondulation soit renvoyée sur le réseau d'alimentation A, il est préférable de la filtrer en plaçant une inductance L1 en amont du condensateur C1 du convertisseur DC/DC 14. Cette inductance L1 peut être placée sur la ligne conductrice reliant le condensateur C1 au point de connexion M ou N (variante non représentée) ou préférentiellement directement sur une ligne du bus continu, en amont du point de connexion M ou N du convertisseur DC/DC et en aval du module redresseur. Sur la figure 1, Les inductances L1 et L2 sont montées en série de part et d'autre du point de connexion M du convertisseur DC/DC sur la ligne positive du bus continu. En étant placée directement sur le bus continu comme sur la figure 1, l'inductance L1 contribue à réduire le THDI en entrée du variateur et les pointes de courant dans le convertisseur DC/DC.

Enfin, il est également possible d'ajouter un interrupteur S1, par exemple de type contacteur, sur une des lignes conductrices reliant le condensateur C1 au point de connexion M ou N sur le bus continu. Ce contacteur S1 permet d'éviter de décharger le super-condensateur UC lorsque la tension Vdc du bus continu en sortie du module redresseur 12 est inférieure à la tension Vuc aux bornes du super-condensateur UC et lorsque le variateur n'est pas alimenté par le réseau A.

Les transistors T1 et T2 sont commandés à l'amorçage, c'est-à-dire à la fermeture, ou au blocage, c'est-à-dire à l'ouverture, à l'aide d'un module de commande 2 de type modulateur réalisant une modulation à largeur d'impulsion. La modulation à largeur d'impulsion consiste à comparer une porteuse haute fréquence avec une modulante basse fréquence ou constante. La fréquence de découpage est fixée par la fréquence de la porteuse et est par exemple égale à 20 kHz.

Pour la commande des transistors T1, T2 du convertisseur DC/DC 14, une boucle interne en courant détermine la modulante m de manière à contrôler la commutation des transistors T1 et T2 et ainsi contrôler le courant moyen Iuc traversant l'inductance L3. Par ailleurs, une boucle externe permet de fixer la référence Iuc* de courant à appliquer à la boucle interne de courant pour réguler le courant Iuc. Suivant le mode de fonctionnement du variateur, c'est-à-dire récupération de l'énergie lors du freinage de la charge électrique C, démarrage de la charge électrique C, filtre actif du bus continu, la boucle externe sera différente et la commande des transistors T1, T2 sera donc également différente.

En supposant la modulante m constante, on a alors la relation Vs=m*Ve avec Vs désignant la tension en sortie du convertisseur 14 et Ve la tension en entrée du convertisseur. Le courant moyen traversant l'inductance L3 peut alors être contrôlé de la manière suivante :

Lorsque la porteuse est supérieure à la modulante, le transistor T2 est fermé et le transistor T1 est ouvert. La tension de sortie instantanée Vs est donc égale à la tension VC1 aux bornes de C1 et donc à la tension Vdc du bus continu. Comme la tension Ve vaut également la tension VC1 et est donc supérieure à la tension Vuc aux bornes du super-condensateur, le courant traversant l'inductance L3 augmente.

Lorsque la porteuse est inférieure à la modulante, le transistor T2 est ouvert et le transistor T1 est fermé. La tension Vs est donc nulle. Comme la tension Ve est également nulle et inférieure à la tension Vuc aux bornes du super-condensateur, le courant dans l'inductance L3 diminue.

Selon le mode de fonctionnement du variateur, la boucle externe est donc différente et génère une consigne de courant différente à destination de la boucle interne pour commander les deux transistors T1, T2. Les différents modes de fonctionnement sont les suivants et sont expliqués ci-dessous :

- Récupération de l'énergie lors du freinage de la charge C,

- Démarrage du variateur, surcharge moteur ou décharge du super-condensateur,

- Creux de tension ou arrêt du réseau d'alimentation,

- Filtre actif sur le bus continu.

Lors du freinage de la charge électrique C, l'énergie générée lors de ce freinage peut être récupérée et stockée dans le super-condensateur UC. Pour cela, l'unité de commande du variateur de vitesse indique au module de commande 2 du convertisseur DC/DC que le mode de fonctionnement est récupération de l'énergie. Dans ce cas, la boucle externe mise en place est une boucle de tension destinée à contrôler la tension Vdc aux bornes du condensateur de bus. Lors du freinage, la tension Vdc du bus continu augmente. Lorsque cette tension atteint une valeur seuil, par exemple de 750 Volts, le convertisseur DC/DC 14 est commandé via la boucle interne pour dérouter le surplus d'énergie dans le super-condensateur UC, tout en maintenant constante la tension Vdc du bus continu. L'accumulation d'énergie dans le super-condensateur UC entraîne une augmentation de la tension aux bornes du super-condensateur UC. Le super-condensateur UC est dimensionné pour pouvoir stocker toute l'énergie fournie par la charge C lors d'un freinage. Cependant, si la tension aux bornes du super-condensateur UC venait à être trop élevée, le surplus d'énergie serait amené à être dissipé dans une résistance de freinage pour protéger le super-condensateur.

Lors du démarrage du variateur, le super-condensateur UC est utilisé. L'unité de commande du variateur indique au module de commande 2 du convertisseur DC/DC 14 que le mode de fonctionnement est moteur. Selon le niveau de puissance à fournir à la charge C, le super-condensateur UC fournit de l'énergie à la charge C via la commande du convertisseur DC/DC 14. Une consigne de courant est appliquée en entrée de la boucle interne de manière à contrôler le débit de courant à destination de la charge tout en s'assurant que la tension Vdc du bus continu ne dépasse par un certain seuil, par exemple fixé à 700 Volts. Lorsque la tension aux bornes du super-condensateur UC atteint un seuil bas, par exemple fixé à la moitié de sa tension maximale lorsqu'il est complètement chargé, le super-condensateur UC n'est plus utilisé jusqu'à ce qu'il ait de nouveau atteint un niveau de tension suffisant.

Lorsqu'une perturbation telle qu'un creux de tension apparaît sur le réseau d'alimentation A ou même lorsque le réseau d'alimentation A est arrêté et ne fournit plus de courant, la tension Vdc du bus continu peut diminuer jusqu'à atteindre un seuil bas à partir duquel l'énergie emmagasinée dans le super-condensateur UC est utilisée. La consigne de courant appliquée au convertisseur DC/DC 14 pour fournir du courant est déterminée à partir d'une boucle externe de tension dont la consigne est le maintien de la tension Vdc du bus continu à un niveau déterminé, par exemple de 700 Volts.

Un dernier mode de fonctionnement consiste à utiliser l'ensemble constitué par le convertisseur DC/DC 14 et le super-condensateur UC comme filtre actif parallèle pour le bus continu. Cela consiste à contrôler le courant I1 sur le bus continu pour que celui-ci soit constant et permettre ainsi de limiter le THDI en entrée du module redresseur 12. Ce mode de fonctionnement est utilisé en permanence lorsque le moteur fonctionne en moteur grâce à l'énergie fournie par le réseau.

Pour cela, on utilise un premier capteur de courant placé sur la ligne positive 10 du bus continu sur laquelle sont positionnées les inductances L1 et L2 et un second capteur de courant placé en série avec l'inductance L3 pour mesurer le courant traversant l'inductance L3. Dans une première variante, le premier capteur de courant est placé pour mesurer le courant I2 sur la ligne positive du bus continu en aval du point M, et dans une seconde variante, le premier capteur peut être placé pour mesurer le courant I1 sur la ligne positive 10 du bus continu, en amont du point M. Bien entendu, si l'inductance L2 était placée sur la ligne négative 11 du bus, le premier capteur serait placé sur la ligne négative 11 du bus, en amont ou en aval du point N. Dans une variante de réalisation, le premier capteur de courant peut être remplacé par des moyens logiciels d'estimation du courant I1 ou I2 circulant en amont du point M ou du point N ou en aval du point M ou du point N.

Pour les deux variantes définies ci-dessus, dans une première étape 20 la mesure du courant I1 ou celle du courant I2 est filtrée afin de ne conserver que la composante alternative du courant mesuré I1 ou I2. Le courant I2 est composé d'une composante active continue proportionnelle à la puissance active absorbée par la charge C et d'une composante réactive alternative image d'une puissance réactive fluctuante entre le réseau et le variateur due à la charge et décharge du condensateur Cb. Le but de la commande est alors de fournir un courant I3 égal à la composante réactive alternative du courant I2 afin d'éliminer la composante alternative du courant I1 et d'obtenir un courant constant. La composante alternative extraite des mesures des courants I1 ou I2 est donc appliquée comme consigne de courant I3* à la boucle externe 21 afin de déterminer une consigne en courant Iuc* à appliquer à la boucle interne 22. La consigne I3* correspond au courant à fournir par le super-condensateur UC pour éliminer toute composante alternative du courant I1 et obtenir ainsi un courant I1 constant en sortie du module redresseur 13 et donc un THDI en entrée du variateur faible. Selon la mesure du courant effectuée, la consigne en courant Iuc* sera différente.

Dans la boucle externe 21, la consigne en courant Iuc* est calculée en appliquant un calcul de puissance constant, c'est-à-dire que la puissance en entrée du convertisseur DC/DC est égale à la puissance en sortie du convertisseur DC/DC. Le raisonnement est le suivant :

$$VC1 \times I3^* = Vuc \times Iuc^*$$

On obtient alors $Iuc^* = VC1 \times I3^* / Vuc$

La consigne Iuc* obtenue peut donc être appliquée à la boucle interne 22 en vue de commander les transistors T1 et T2 de manière à contrôler le courant Iuc traversant le super-condensateur UC. En contrôlant le courant Iuc, c'est-à-dire le courant traversant l'inductance L3 et le super-condensateur UC, il est ainsi possible de contrôler le courant I1 sur le bus continu et de faire en sorte que ce courant soit constant en éliminant ses harmoniques et obtenir ainsi un THDI réduit en entrée du variateur, de l'ordre de 30%. Un gain peut être appliqué à la consigne Iuc* en entrée de la boucle interne 22 lorsque le courant mesuré est I1.

Par ailleurs, la commande des transistors T1, T2 du convertisseur DC/DC 14 doit être adaptée pour tenir compte de la baisse de la tension Vuc aux bornes du super-condensateur UC due aux pertes générées lors de la commutation des transistors T1, T2. Dans la boucle interne 22, la tension Vuc doit donc être mesurée et surveillée pour être maintenue constante.

## Revendications

1. Variateur (1) de vitesse comportant :

   - un bus continu d'alimentation de puissance doté d'une ligne positive (10) et d'une ligne négative (11),
   - un condensateur de bus (Cb), formant une source de tension, connecté entre la ligne positive (10) et la ligne négative (11) du bus continu,
   - un module onduleur (13) alimenté par le bus continu et commandé pour délivrer une tension variable à une charge électrique (C),
   - des moyens de stockage (UC) de l'énergie électrique récupérée lors d'un freinage de la charge électrique (C),
   - un convertisseur continu/continu (14) connecté en amont et en parallèle du condensateur de bus, entre la ligne positive et la ligne négative du bus continu,

   **caractérisé en ce que** le variateur comporte également :

   - un dispositif (L2) monté sur la ligne positive (10) ou la ligne négative (11) du bus continu entre le convertisseur continu/continu (14) et le condensateur de bus (Cb), ledit dispositif permettant de transformer la source de tension constituée par le condensateur de bus (Cb) en une source de courant,
   - des moyens de mesure ou d'estimation du courant (I1, I2) circulant dans la ligne du bus continu portant ledit dispositif,
   - un module de commande (2) du convertisseur continu/continu (14) pour contrôler le courant (Iuc) traversant les moyens de stockage d'énergie (UC) en fonction du courant (I1, I2) mesuré ou estimé circulant dans la ligne du bus continu portant le dispositif..

2. Variateur selon la revendication 1, **caractérisé en ce que** le dispositif permettant de transformer la source de tension constituée par le condensateur de bus (Cb) en source de courant est une première inductance (L2).

3. Variateur selon la revendication 2, **caractérisé en ce qu'**il comporte une seconde inductance (L1) montée en série avec la première inductance (L2).

4. Variateur selon la revendication 3, **caractérisé en ce que** la seconde inductance (L1) est montée en série avec la première inductance (L2) sur la ligne positive ou négative du bus continu, le convertisseur continu/continu (14) étant connecté sur la ligne correspondante du bus continu entre la première inductance (L2) et la seconde inductance (L1).

5. Variateur selon l'une des revendications 2 à 4, **caractérisé en ce que** les moyens de mesure sont placés en amont ou en aval du point de connexion du convertisseur continu/continu (14) sur la ligne du bus continu portant la première inductance (L2).

6. Variateur selon la revendication 1, **caractérisé en ce que** le convertisseur continu/continu (14) comporte deux interrupteurs électroniques (T1, T2) en série montés entre la ligne positive (10) et la ligne négative (11) du bus continu et un condensateur (C1) monté en parallèle et en amont des deux interrupteurs (T1, T2).

7. Variateur selon la revendication 6, **caractérisé en ce qu'**il comporte une inductance (L3) connectée entre le point milieu formé par les deux interrupteurs électroniques (T1, T2) du convertisseur continu/continu (14) et une borne des moyens de stockage d'énergie.

8. Variateur selon l'une des revendications 1 à 7, **caractérisé en ce qu'**il comporte des moyens de mesure du courant circulant à travers les moyens de stockage d'énergie (UC).

9. Variateur selon l'une des revendications 1 à 8, **caractérisé en ce que** les interrupteurs électroniques (T1, T2) du convertisseur continu/continu (14) sont de type IGBT.

10. Variateur selon l'une des revendications 1 à 9, **caractérisé en ce qu'**il comporte un interrupteur (S1) monté en amont du convertisseur continu/continu (14), sur une ligne conductrice reliant le convertisseur continu/continu (14) au bus continu.

11. Variateur selon l'une des revendications 1 à 10, **caractérisé en ce que** le module de commande (2) comporte une boucle externe (21) contrôlant une boucle interne (22) de courant destinée à la commande du convertisseur continu/continu (14).

12. Variateur selon l'une des revendications 1 à 11, **caractérisé en ce que** les moyens de stockage d'énergie comportent un ou plusieurs super-condensateurs.

**Claims**

1.  Variable speed drive (1) comprising:

    - a DC power supply bus provided with a positive line (10) and a negative line (11),
    - a bus capacitor (Cb), forming a voltage source, connected between the positive line (10) and the negative line (11) of the DC bus,
    - an inverter module (13) powered by the DC bus and controlled to deliver a variable voltage to an electric load (C),
    - means (UC) for storing the electric energy recovered on braking of the electric load (C),
    - a DC/DC converter (14) connected upstream of and in parallel with the bus capacitor, between the positive line and the negative line of the DC bus,
    **characterized in that** the variable speed drive also comprises:
    - a device (L2) mounted on the positive line (10) or the negative line (11) of the DC bus between the DC/DC converter (14) and the bus capacitor (Cb), said device converting the voltage source formed by the bus capacitor (Cb) into a current source,
    - means for measuring or estimating the current (I1, 12) flowing in the line of the DC bus supporting said device,
    - a control module (2) of the DC/DC converter (14) for monitoring the current (Iuc) passing through the energy storage means (UC) according to the measured or estimated current (I1, 12) flowing in the line of the DC bus supporting the device.

2.  Variable speed drive according to Claim 1, **characterized in that** the device for converting the voltage source formed by the bus capacitor (Cb) into a current source is a first inductance (L2).

3.  Variable speed drive according to Claim 2, **characterized in that** it includes a second inductance (L1) mounted in series with the first inductance (L2).

4.  Variable speed drive according to Claim 3, **characterized in that** the second inductance (L1) is mounted in series with the first inductance (L2) on the positive or negative line of the DC bus, the DC/DC converter (14) being connected to the corresponding line of the DC bus between the first inductance (L2) and the second inductance (L1).

5.  Variable speed drive according to one of Claims 2 to 4, **characterized in that** the measurement means are placed upstream or downstream of the point of connection of the DC/DC converter (14) on the line of the DC bus supporting the first inductance (L2).

6.  Variable speed drive according to Claim 1, **characterized in that** the DC/DC converter (14) includes two electronic switches (T1, T2) in series mounted between the positive line (10) and the negative line (11) of the DC bus and a capacitor (C1) mounted in parallel and upstream of the two switches (T1, T2).

7.  Variable speed drive according to Claim 6, **characterized in that** it includes an inductance (L3) connected between the mid point formed by the two electronic switches (T1, T2) of the DC/DC converter (14) and a terminal of the energy storage means.

8.  Variable speed drive according to one of Claims 1 to 7, **characterized in that** it includes means for measuring the current flowing through the energy storage means (UC).

9.  Variable speed drive according to one of Claims 1 to 8, **characterized in that** the electronic switches (T1, T2) of the DC/DC converter (14) are of IGBT type.

10. Variable speed drive according to one of Claims 1 to 9, **characterized in that** it includes a switch (S1) mounted upstream of the DC/DC converter (14), on a conductive line linking the DC/DC converter (14) to the DC bus.

11. Variable speed drive according to one of Claims 1 to 10, **characterized in that** the control module (2) includes an external loop (21) monitoring an internal current loop (22) intended to control the DC/DC converter (14).

12. Variable speed drive according to one of Claims 1 to 11, **characterized in that** the energy storage means include one or more supercapacitors.

**Patentansprüche**

1.  Stromrichtervorrichtung (1), die Folgendes umfasst:

    - einen Leistungsversorgungs-Gleichstrombus, der mit einer positiven Leitung (10) und mit einer negativen Leitung (11) versehen ist,
    - einen Buskondensator (Cb), der eine Spannungsquelle bildet und zwischen die positive Leitung (10) und die negative Leitung (11) des Gleichstrombusses geschaltet ist,
    - ein Wechselrichtermodul (13), das durch den Gleichstrombus versorgt wird und gesteuert wird, um an eine elektrische Last (C) eine veränderliche Spannung zu liefern,

- Speichermittel (UC) für elektrische Energie, die bei einer Bremsung der elektrischen Last (C) wiedergewonnen wird,

- einen Gleichstrom/Gleichstrom-Umsetzer (14), der auf der Eingangsseite des Buskondensators und parallel hierzu zwischen die positive Leitung und die negative Leitung des Gleichstrombusses geschaltet ist,

**dadurch gekennzeichnet, dass** der Stromrichter außerdem Folgendes umfasst:

- eine Vorrichtung (L2), die in der positiven Leitung (10) oder in der negativen Leitung (11) des Gleichstrombusses zwischen den Gleichstrom/ Gleichstrom-Umsetzer (14) und den Buskondensator (Cb) geschaltet ist, wobei die Vorrichtung ermöglicht, die durch den Buskondensator (Cb) gebildete Spannungsquelle in eine Stromquelle umzuwandeln,

- Mittel zum Messen oder Schätzen des Stroms (I1, I2), der in der Leitung des Gleichstrombusses, die die Vorrichtung trägt, fließt,

- ein Modul (2) zum Steuern des Gleichstrom/ Gleichstrom-Umsetzers (14), um den Strom (Iuc), der durch die Energiespeichermittel (UC) fließt, als Funktion des gemessenen oder geschätzten Stroms (I1, I2), der in der Leitung des Gleichstrombusses, der die Vorrichtung trägt, fließt, zu steuern.

2. Stromrichter nach Anspruch 1, **dadurch gekennzeichnet, dass** die Vorrichtung, die die Umwandlung der durch den Buskondensator (Cb) gebildeten Spannungsquelle in eine Stromquelle ermöglicht, eine erste Induktivität (L2) ist.

3. Stromrichter nach Anspruch 2, **dadurch gekennzeichnet, dass** er eine zweite Induktivität (L1) umfasst, die mit der ersten Induktivität (L2) in Reihe geschaltet ist.

4. Stromrichter nach Anspruch 3, **dadurch gekennzeichnet, dass** die zweite Induktivität (L1) in der positiven oder negativen Leitung des Gleichstrombusses in Reihe mit der ersten Induktivität (L2) geschaltet ist, wobei der Gleichstrom/GleichstromUmsetzer (14) zwischen der ersten Induktivität (L2) und der zweiten Induktivität (L1) mit der entsprechenden Leitung des Gleichstrombusses verbunden ist.

5. Stromrichter nach einem der Ansprüche 2 bis 4, **dadurch gekennzeichnet, dass** die Messmittel auf der Einlassseite oder auf der Auslassseite des Verbindungspunkts des Gleichstrom/Gleichstrom-Umsetzers (14) auf der Leitung des Gleichstrombusses, die die erste Induktivität (L2) trägt, angeordnet sind.

6. Stromrichter nach Anspruch 1, **dadurch gekenn-**

**zeichnet, dass** der Gleichstrom/GleichstromUmsetzer (14) zwei elektronische Unterbrecher (T1, T2), die zwischen der positiven Leitung (10) und der negativen Leitung (11) des Gleichstrombusses in Reihe geschaltet sind, und einen Kondensator (C1), der vor den beiden Unterbrechern (T1, T2) parallel hierzu geschaltet ist, umfasst.

7. Stromrichter nach Anspruch 6, **dadurch gekennzeichnet, dass** er eine Induktivität (L3) umfasst, die zwischen den Mittelpunkt, der durch die zwei elektronischen Unterbrecher (T1, T2) des Gleichstrom/ Gleichstrom-Umsetzers (14) gebildet ist, und einen Anschluss der Energiespeichermittel geschaltet ist.

8. Stromrichter nach einem der Ansprüche 1 bis 7, **dadurch gekennzeichnet, dass** er Mittel zum Messen des Stroms, der durch die Energiespeichermittel (UC) fließt, umfasst.

9. Stromrichter nach einem der Ansprüche 1 bis 8, **dadurch gekennzeichnet, dass** die elektronischen Unterbrecher (T1, T2) des Gleichstrom/Gleichstrom-Umsetzers (14) vom IGBT-Typ sind.

10. Stromrichter nach einem der Ansprüche 1 bis 9, **dadurch gekennzeichnet, dass** er einen Unterbrecher (S1) umfasst, der auf der Einlassseite des Gleichstrom/ Gleichstrom-Umsetzers (14) in einer Leitung angebracht ist, die den Gleichstrom/Gleichstrom-Umsetzer (14) mit dem Gleichstrombus verbindet.

11. Stromrichter nach einem der Ansprüche 1 bis 10, **dadurch gekennzeichnet, dass** das Steuermodul (2) eine externe Schleife (21) umfasst, die eine interne Stromschleife (22) steuert, die für die Steuerung des Gleichstrom/Gleichstrom-Umsetzers (14) bestimmt ist.

12. Stromrichter nach einem der Ansprüche 1 bis 11, **dadurch gekennzeichnet, dass** die Energiespeichermittel einen oder mehrere Superkondensatoren umfassen.

**Fig. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1833158 A

- US 6742630 B